# FASCICULE DE BREVET EUROPEEN

(11) **EP 1 092 587 B1**
(45) Date de publication et mention de la délivrance du brevet: **08.06.2005**
(21) Numéro de dépôt: 00490040.3
(22) Date de dépôt: 04.10.2000
(51) Int. Cl.: B60N 2/58, B60N 2/60

(54) **Housse, notamment pour sièges de véhicules automobiles**
Schonbezug für Kraftfahrzeugsitze
Cover for motor vehicle seats

(30) Priorité: 12.10.1999 FR 9912930
(43) Date de publication de la demande: 18.04.2001
(73) Titulaire: HOLDING SWEETCO, Société Anonyme, 59115 Leers (FR)
(72) Inventeur: Room, Thierry, 59300 Valenciennes (FR); Defour, Evelyne, 59590 Raismes (FR)
(74) Mandataire: Duthoit, Michel

(56) Documents cités:
- EP-A- 0 588 506
- DE-A- 19 727 746
- FR-A- 2 685 182
- GB-A- 2 246 704
- US-A- 4 400 030
- US-A- 4 693 511
- US-A- 5 005 901
- US-A- 5 893 579

## Description

L'invention concerne une housse, notamment housse de sièges de deuxième monte pour véhicules automobiles.

Toutefois, bien que plus particulièrement prévue pour de telles applications, elle pourra être employée dans tous les secteurs de l'activité économique dans lesquels on est amené à utiliser des housses

Actuellement, dans le domaine des sièges de véhicules automobiles, il est connu de rééquiper ceux-ci de housses dites « de deuxième monte », c'est-à-dire destinée à recouvrir les housses d'origine. Elles permettent d'éviter leur usure et/ou d'adapter l'aspect esthétique des sièges au goût des utilisateurs du véhicule.

Afin qu'une même housse puisse être utilisée d'un véhicule à l'autre pour différents types de sièges, il a déjà été proposé des solutions permettant d'adapter leurs dimensions aux dimensions du siège à recouvrir.

On connaît ainsi des housses constituées au niveau de leurs côtés latéraux de tissu extensible. Elles peuvent encore être munies de fronces.

Il est également connu du document US 4 400 030 une housse de siège automobile, constituée de deux demi-housses, l'une de dossier , l'autre d'assise. La demi-housse d'assise présente des moyens d'adaptation constitués d'un rabat élastique, apte à s'enrouler sur l'assise et à s'agripper sur l'arrière de la demi-housse d'assise.

Toutefois, le document US 4 400 030 ne décrit pas une housse comprenant des moyens d'adaptation pour le dossier.

Cela étant, ces solutions ne sont pas entièrement satisfaisantes, notamment en ce qui concerne la tension des housses sur les sièges. En effet, elles restent incomplètes ce qui génère des plis d'aspect peu esthétiques et ne permet pas un maintien optimum.

En outre, de telles housses ne sont pas compatibles avec la présence dans les sièges à recouvrir d'un coussin gonflable destiné à se déployer dans l'habitacle du véhicule car elles empêcheraient son expansion.

Le but de la présente invention est de proposer une housse qui pallie les inconvénients précités et dont la tension sur l'objet destiné à être recouvert par ladite housse soit facilitée.

Un autre but de la présente invention est de proposer une housse qui permette l'expansion, à travers ladite housse, d'un objet, notamment coussin gonflable.

D'autres buts et avantages de l'invention apparaîtront au cours de la description qui va suivre qui n'est donnée qu'à titre indicatif et qui n'a pas pour but de la limiter.

L'invention concerne une housse, constituée au moins d'une enveloppe, définissant au moins une demi-housse, dite de dossier, destinée à recouvrir le dossier d'un siège, ladite enveloppe étant munie des moyens d'adaptation des dimensions de ladite enveloppe aux dimensions du siège destiné à être recouvert, caractérisée en ce que ladite demi-housse de dossier est munie desdits moyens d'adaptation, lesquels sont constitués par au moins deux parties de ladite enveloppe, en ce que lesdites deux parties se chevauchent à la manière d'un montage portefeuille, et sont prévues sur le ou les côtés de la demi-housse de dossier destinés à recouvrir le ou les côtés latéraux du dossier du siège, sur une partie au moins de leur hauteur et se prolongeant l'une vers l'autre selon une direction transversale à ladite hauteur, et en ce que ladite housse comprend des moyens de liaison desdites deux parties qui se chevauchent, prévus au niveau des bords transversaux desdites deux parties.

L'invention sera mieux comprise à la lecture de la description suivante, accompagnée des dessins en annexe qui en font partie intégrante et parmi lesquels :
- la figure 1 décrit, en perspective, un exemple de réalisation de la housse conforme à l'invention,
- la figure 2 illustre, en perspective, un sous-ensemble de la housse illustrée à la figure 1,
- la figure 3 détaille une partie, repérée III, de la housse représentée à la figure 1,
- les figures 4 et 4' détaillent, selon deux modes de réalisation différents, une partie repérée IV à la figure 1 précédente.

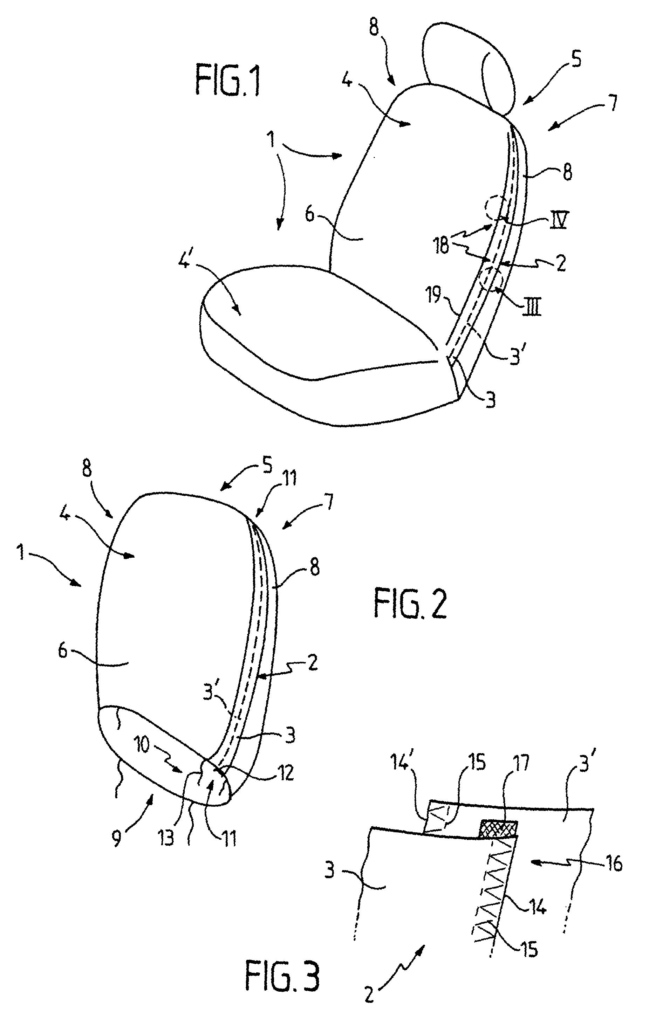

Comme illustrée aux figures 1 et 2, la housse conforme à l'invention est constituée d'au moins une enveloppe 1. En outre, elle est munie de moyens 2 d'adaptation des dimensions de ladite enveloppe 1 aux dimensions de l'objet destiné à être recouvert.

Comme détaillé à la figure 3, selon l'invention, lesdits moyens 2 d'adaptation sont constitués par au moins deux parties 3, 3' de ladite enveloppe 1 se chevauchant, à la manière d'un montage portefeuille.

On obtient ainsi une housse de taille adaptable et qui peut facilement être mise en tension.

Lesdites deux parties 3, 3' qui se chevauchent sont constituées, par exemple, de deux pièces de tissu distinctes définissant, notamment, un côté de l'enveloppe 1 de la housse.

En se reportant de nouveau aux figures précédentes, on constate que la housse est constituée, par exemple, d'au moins deux demi-housses. L'une 4, dite de dossier, est destinée à recouvrir le dossier d'un siège et l'autre 4', dite d'assise, est destinée à recouvrir son assise, chacune desdites demi-housses 4, 4' étant formée, notamment, d'unedite enveloppe 1.

L'enveloppe 1 définissant la demi-housse de dossier 4 est définie, par exemple, par un bord supérieur 5, reliant la face avant 6 de ladite demi-housse 4, c'est-à-dire, celle sur laquelle est destinée à s'appuyer le dos de l'utilisateur, et sa face arrière, c'est-à-dire celle recouvrant le dos du dossier du siège, ainsi que par des côtés latéraux 8, reliant ladite face avant 6 et ladite face arrière 7 pour définir une ouverture 9 d'introduction de ladite demi-housse de dossier 4.

Lesdits moyens d'adaptation 2 sont prévus, notamment, au niveau de ladite demi-housse de dossier 4. Plus précisément, lesdites deux parties qui se chevauchent 3, 3' pourront être situées sur le ou les côtés 8 de la housse destinée à recouvrir le ou les côtés latéraux du dossier du siège, sur une partie au moins de leur hauteur. Lesdites deux parties se prolongent alors l'une vers l'autre selon une direction transversale à ladite hauteur.

Ladite housse comprend en outre, éventuellement, des moyens 10 de liaison desdites deux parties 3, 3' qui se chevauchent, lesdits moyens 10 de liaison étant prévus au niveau des bords transversaux 11 desdites deux parties. Il pourra s'agir, par exemple, de coutures 12.

Lesdits moyens de liaison 10 pourront également être constitués, au niveau du bord transversal 11 desdites deux parties 3, 3' destinées à se trouver en regard de l'assise, au moins de moyens élastiqués 13 suspendus à ladite enveloppe 1 au voisinage de chacune desdites deux parties qui se chevauchent 3, 3', de manière à favoriser la tension transversale de l'enveloppe 1, notamment par accrochage sur une partie mécanique du siège.

En se reportant de nouveau à la figure 3, on constate que lesdites parties qui se chevauchent 3, 3' sont prévues, par exemple, au niveau des bords 14, 14' de la ou des pièces textiles qui les constituent. Ils sont alors éventuellement munis d'un surjet 15.

Ladite housse pourra en outre comprendre des moyens 16 de tension longitudinale desdites deux parties 3, 3' qui se chevauchent. Il pourra s'agir, par exemple, d'une bande élastiquée 17, située longitudinalement sur l'une desdites deux parties 3, 3'.

Afin de favoriser simultanément une tension transversale et longitudinale de l'enveloppe 1, l'un desdits moyens élastiqués 13 pourra être prévu sensiblement dans le prolongement de ladite bande élastiquée 17.

Ladite enveloppe 1 est constituée, au moins au niveau desdites deux parties 3, 3' qui se chevauchent, notamment, d'un tissu inextensible. On entend par là un tissu présentant une élasticité similaire au reste de l'enveloppe 1, tout au moins à celle de ladite face arrière 7. Ledit tissu est doublé, éventuellement, sur sa face interne, d'une feuille de mousse facilitant l'adhérence.

Cela étant, ladite housse pourra en outre comprendre des moyens d'ouverture 18 de ladite enveloppe 1 destinée à laisser passer un objet, notamment un coussin gonflable, à travers ladite enveloppe.

Lesdits moyens d'ouverture 18 sont situés, en particulier, au niveau de l'enveloppe 1 définissant la demi-housse de dossier 4.

Lesdits moyens d'ouverture 18 sont constitués, par exemple, au moins desdits moyens d'adaptation 2 eux-mêmes, situés sur un côté de l'enveloppe destinée à laisser passer ledit objet.

Dans le cas de coussins gonflables, il est à noter qu'en fonction des sièges de véhicules équipés, ceux-ci peuvent être situés à différents niveaux. Pour disposer de housses universelles non seulement en ce qui concerne la taille des sièges à recouvrir mais encore en ce qui concerne le positionnement des coussins gonflables, on pourra prévoir des moyens d'ouverture complémentaires.

Ainsi, en plus de premiers moyens d'ouverture constitués desdits moyens d'adaptation 2, on pourra équiper la housse de seconds moyens d'ouvertures 19, les premiers étant situés, notamment sensiblement au milieu du ou des côtés latéraux 8, et les seconds prévus le long d'un des bords du ou desdits côtés latéraux 8.

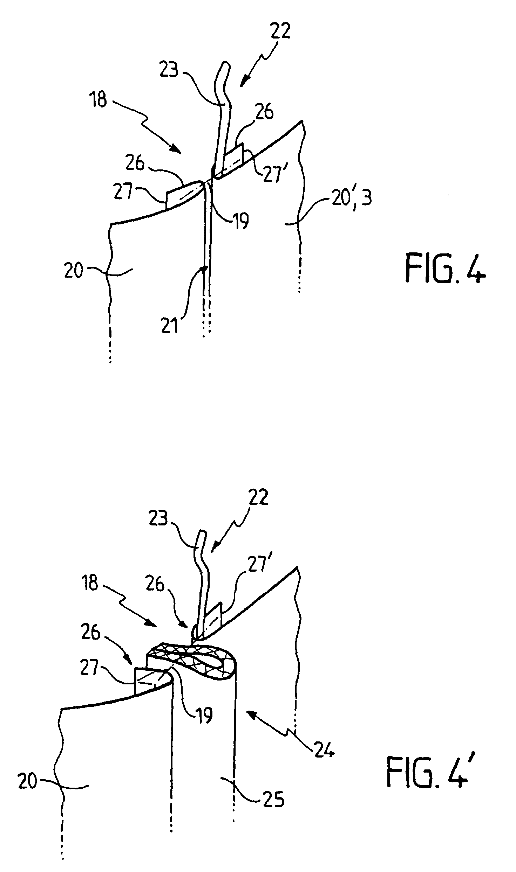

Comme illustrée aux figures 4 et 4', la housse conforme à l'invention comprend pour cela, selon un mode particulier de réalisation, une couture 19 reliant, directement ou non, deux parties 20, 20' de ladite enveloppe 1 pour fermer localement cette dernière, l'une au moins desdites deux parties 3, 3' qui se chevauche et l'une au moins desdites deux parties 20, 20' reliée par ladite couture 19 étant distincte.

Lesdits moyens d'ouverture 18 sont alors prévus aptes, en outre, à laisser céder ladite couture 19 sous l'action d'une contrainte prédéterminée tout en assurant sa résistance pour les contraintes plus faibles, de manière à permettre l'apparition ou non, en fonction des contraintes appliquées, d'une fente 21 entre lesdites deux parties 20, 20'.

Plus précisément, outre lesdits moyens d'adaptation 2, lesdits moyens d'ouverture 18 sont définis, par exemple, au moins par ladite couture 19 elle-même, formée à cette fin en points noués pour ajuster sa résistance.

Par couture en points noués, on entend, de façon connue de l'homme de l'art, une couture constituée d'un fil épais et d'un fil fin, successivement noués l'un à l'autre.

La résistance de la couture est adaptée, notamment par le nombre de points au centimètre utilisé. Plus le nombre de points est grand, plus la résistance de la couture est élevée.

A titre d'exemple, pour permettre l'expansion d'un coussin gonflable, on pourra employer deux à trois points par centimètre.

Grâce à ladite couture 19, l'ouverture de la fente 21 sera progressive.

Lesdits moyens d'ouverture 18 pourront aussi comprendre, notamment, un élément de renfort 22 distinct, situé parallèlement à ladite couture 19, sur une partie au moins de sa longueur. Ledit élément de renfort 22 et lesdites parties 20, 20' de l'enveloppe sont cousus par ladite couture 19.

Ledit élément de renfort 22 est constitué, notamment d'une ganse 23. Cette dernière est formée, par exemple, d'une matière inextensible, tissée.

Ladite housse pourra encore comprendre, éventuellement, un élément décoratif 24, prévu longitudinalement entre lesdites deux parties 20, 20' et cousu à ces dernières par ladite couture 19.

Ledit élément décoratif 24 est constitué, par exemple, d'un jonc 25. Ce dernier est formé, notamment, d'une bande de matériau synthétique repliée sur elle-même.

Comme illustrée, ladite couture 19 est prévue, éventuellement, au niveau d'un revers 26, situé au voisinage d'un bord 27, 27' de chacune desdites deux parties 20, 20', reliées directement ou non par ladite couture 19. Selon ce mode de réalisation, ladite ganse 23 pourra être placée à l'intérieur d'undit revers 26.

Naturellement, d'autres modes de mise en oeuvre, à la portée de l'homme de l'art, auraient pu être envisagés sans pour autant sortir du cadre de l'invention.

## Revendications

1. Housse, constituée au moins d'une enveloppe (1), définissant au moins une demi-housse (4), dite de dossier, destinée à recouvrir le dossier d'un siège, ladite enveloppe (1,4) étant munie des moyens d'adaptation (2) des dimensions de ladite enveloppe (1,4) aux dimensions du siège destiné à être recouvert, **caractérisée en ce que** ladite demi-housse de dossier (4) est munie desdits moyens d'adaptation (2), lesquels sont constitués par au moins deux parties (3, 3') de ladite enveloppe (1,4), **en ce que** lesdites deux parties (3,3') se chevauchent à la manière d'un montage portefeuille, et sont prévues sur le ou les côtés de la demi-housse de dossier (4) destinés à recouvrir le ou les côtés latéraux du dossier du siège, sur une partie au moins de leur hauteur et se prolongeant l'une vers l'autre selon une direction transversale à ladite hauteur, et **en ce que** ladite housse comprend des moyens de liaison (10) desdites deux parties (3,3') qui se chevauchent, prévus au niveau des bords transversaux (11) desdites deux parties (3,3').

2. Housse, selon la revendication 1, dans laquelle lesdits moyens de liaison (10) sont constitués, au niveau du bord transversal (11) desdites deux parties (3, 3') destinées à se trouver en regard de l'assise, au moins de moyens élastiqués (13) suspendus à ladite enveloppe (1) au voisinage de chacune desdites deux parties (3, 3') qui se chevauchent, de manière à favoriser la tension transversale de l'enveloppe.

3. Housse, selon l'une quelconque des revendications 1 ou 2, comprenant des moyens de tension longitudinale (16) desdites deux parties (3, 3') qui se chevauchent.

4. Housse, selon la revendication 3, dans laquelle lesdits moyens de tension longitudinale (16) sont constitués d'une bande élastique (17), prévue longitudinalement sur l'une desdites deux parties (3, 3') qui se chevauchent.

5. Housse, selon l'une quelconque des revendications précédentes, dans laquelle ladite enveloppe (1), au moins au niveau desdites deux parties qui se chevauchent (3, 3') est constituée d'un tissu inextensible.

6. Housse, selon l'une quelconque des revendications précédentes, comprenant en outre des moyens d'ouverture (18) de ladite enveloppe (1), destinée à laisser passer un objet à travers ladite enveloppe (1), constituée au moins desdits moyens d'adaptation (2) eux-mêmes, situés sur un côté de la housse destiné à laisser passer ledit objet.

7. Housse, selon la revendication 6, comprenant une couture (19) reliant, directement ou non, deux parties (20, 20') de ladite enveloppe pour fermer localement cette dernière, l'une au moins desdites deux parties (3, 3') qui se chevauchent et l'une au moins desdites deux parties (20, 20') reliées par ladite couture étant distincte, housse dans laquelle lesdits moyens d'ouverture (18) sont en outre prévus aptes à laisser ladite couture (19) céder sous l'action d'une contrainte prédéterminée tout en assurant sa résistance pour les contraintes plus faibles, de manière à permettre l'apparition ou non, en fonction des contraintes appliquées, d'une fente (21) entre lesdites deux parties (20, 20') reliées, directement ou non, par ladite couture (19).

## Patentansprüche

1. Überzug, bestehend wenigstens aus einem Bezug (1), der wenigstens einen Halbüberzug (4) bildet, der als jener für die Rücklehne bezeichnet wird, vorgesehen, die Rücklehne eines Sitzes zu bedecken, wobei der besagte Bezug (1, 4) mit den Mitteln zur Anpassung (2) der Maße des besagten Bezugs (1, 4) an den Maßen des zu bedeckenden Sitzes ausgestattet sei, **dadurch gekennzeichnet, daß** der besagte Halbüberzug der Rücklehne (4) mit den besagten Anpassungsmitteln (2) ausgestattet ist, die durch wenigstens zwei Teile (3, 3') des besagten Bezugs (1, 4) gebildet sind, daß die beiden besagten Teile (3, 3') auf die Art einer Brieftasche einander übergreifen und auf der Seite oder Seiten des Halbüberzuges der Rücklehne (4) vorgesehen sind, die dazu bestimmt sind, die seitliche Fläche oder Flächen der Rücklehne des Sitzes auf wenigstens einem Teil ihrer Höhe zu bedecken, und sich aufeinander nach einer Querrichtung zu der besagten Höhe verlängern, und daß der besagte Überzug Mittel zur Verbindung (10) der besagten beiden einander übergreifenden Teile (3, 3') umfaßt, die im Bereich der Querränder (11) der besagten beiden Teile (3, 3') vorgesehen sind.

2. Überzug nach Anspruch I, bei dem die besagten Verbindungsmittel (10) im Bereich des Querrandes (11) der besagten beiden Teile (3, 3'), die vorgesehen sind, sich dem Sitz gegenüberstehend zu befinden, zumindest durch elastische Mittel (13) gebildet sind, die an dem besagten Bezug (1) in der Nähe von jedem der beiden besagten einander übergreifenden Teile (3, 3') hängen, derart, um die Querspannung des Bezugs zu begünstigen.

3. Überzug nach irgendeinem der Ansprüche 1 oder 2, umfassend Mittel zum Längsspannen (16) der besagten zwei einander übergreifenden Teile (3, 3').

4. Überzug nach Anspruch 3, bei dem die besagten Mittel zum Längsspannen (16) durch ein elastisches Band (17) gebildet sind, das an einem der besagten zwei einander übergreifenden Teile (3, 3') der Länge nach vorgesehen ist.

5. Überzug nach irgendeinem der vorgehenden Ansprüche, bei dem der besagte Bezug (1) zumindest im Bereich der besagten zwei einander übergreifenden Teile (3, 3') aus einem nicht dehnbaren Stoff besteht.

6. Überzug nach irgendeinem der vorgehenden Ansprüche, umfassend außerdem Mittel zur Öffnung (18) des besagten Bezugs (1), vorgesehen, einen Gegenstand durch den besagten Bezug (1) übergehen zu lassen, bestehend wenigstens aus den besagten Anpassungsmitteln (2) selbst, die sich auf einer Seite des Überzuges befinden, der vorgesehen ist, den besagten Gegenstand übergehen zu lassen.

7. Überzug nach Anspruch 6, umfassend eine Naht (19), die zwei Teile (20, 20') des besagten Bezugs direkt oder indirekt verbindet, um diesen Letzteren örtlich zu schließen, seiend zumindest der eine von den besagten zwei einander übergreifenden Teilen (3, 3') und zumindest der eine von den besagten beiden, durch die besagte Naht verbundenen Teilen (20, 20') unterschiedlich, bei welchem Überzug die besagten Öffnungsmittel (18) außerdem geeignet vorgesehen sind, um die besagte Naht (19) unter der Wirkung eines vorbestimmten Zwanges nachgeben zu lassen, während ihr Widerstand für die schwächeren Zwänge gesichert ist, derart, um in Abhängigkeit von den angewendeten Zwängen das Aufkommen einer Spalte (21) zwischen den besagten beiden Teilen (20, 20'), die durch die besagte Naht (19) direkt oder indirekt verbunden sind, zu erlauben oder nicht zu erlauben.

## Claims

1. A cover, forming at least one envelope (1), defining at least one semi-cover (4), so-called back-type cover, intended for covering the back of a seat, said envelope (1, 4) being fitted with means (2) for adapting the sizes of said envelope (1, 4) to the sizes of the seat intended to be covered, **characterised in that** said back semi-cover (4) is fitted with said adapting means (2), which means are formed of at least two portions (3, 3') of said envelope (1, 4), **in that** said both portions (3, 3') overlap one another in the manner of a foldable assembly, and are provided on the side(s) of the semi-cover of the back (4) intended to cover the lateral side(s) of the back of the seat, over at least a portion of their height and extending towards one another along a direction transversal to said height, and **in that** said cover comprises means (10) for linking said both overlapping portions (3, 3'), provided at the transversal edges (11) of said both portions (3, 3').

2. A cover, according to claim 1, wherein said linking means (10) are formed, at the transversal edge (11) of said both portions (3, 3') intended to face the base plate, by means of elastic means (13) hanging from said envelope (1) in the vicinity of each of said both portions (3, 3') which overlap one another, in order to promote transversal tension of the envelope.

3. A cover according to any of the claims 1 or 2, comprising means (16) for longitudinal tension of said both overlapping portions (3, 3').

4. A cover, according to claim 3, wherein said longitudinal tensioning means (16) are formed of an elastic band (17), provided longitudinally on one of said both overlapping portions (3, 3').

5. A cover according to any of the previous claims, wherein said envelope (1), at least at said both overlapping portions (3, 3') is formed of an inextensible fabric.

6. A cover according to any of the previous claims, comprising moreover means (18) for opening said envelope (1), intended to let an object through said envelope (1), formed at least of said adapting means (2) properly speaking, situated on one side of the cover provided for letting said object through.

7. A cover, according to claim 6, comprising a seam (19) connecting, directly or not, two portions (20, 20') of said envelope to close the latter locally, one at least of said both overlapping portions (3, 3') and one at least of said both portions (20, 20') connected by said seam being distinct, a cover wherein said opening means (18) are moreover provided capable of leaving said seam (19) yield under the action of a preset load while providing the resistance thereof for the smallest loads, to enable the provision or not, with respect to said load applied, of a slot (21) between said both portions (20, 20') connected, directly or not, by said seam (19).
